Europäisches Patentamt

European Patent Office

Office européen des brevets

(11) Numéro de publication: **0 240 379**
**A1**

## (12) DEMANDE DE BREVET EUROPEEN

(21) Numéro de dépôt: **87400363.5**

(22) Date de dépôt: **19.02.87**

(51) Int. Cl.⁴: **G 02 F 1/137**
**G 02 F 1/133**

(30) Priorité: **28.02.86 FR 8602856**

(43) Date de publication de la demande:
**07.10.87 Bulletin 87/41**

(84) Etats contractants désignés:
**CH DE GB IT LI NL**

(71) Demandeur: **COMMISSARIAT A L'ENERGIE ATOMIQUE**
**Etablissement de Caractère Scientifique Technique et**
**Industriel**
**31/33, rue de la Fédération**
**F-75015 Paris (FR)**

(72) Inventeur: **Clerc, Jean-Frédéric**
**7, rue C. Brenier**
**F-38120 Saint Egreve (FR)**

**Deutsch, Jean-Claude**
**52, rue Thiers**
**F-38000 Grenoble (FR)**

**Perrin, Aimé**
**Le Crêt de Chaume**
**F-38330 Saint-Ismier (FR)**

(74) Mandataire: **Mongrédien, André et al**
**c/o BREVATOME 25, rue de Ponthieu**
**F-75008 Paris (FR)**

(54) Cellule à double couche de cristal liquide, utilisant l'effet de biréfringence controlée électriquement et procédé de fabrication d'un milieu uniaxe d'anisotropie optique négative utilisable dans cette cellule.

(57) Cellule à double couche de cristal liquide, utilisant l'effet de biréfringence contrôlée électriquement et procédé de fabrication d'un milieu uniaxe d'anisotropie optique négative, utilisable dans cette cellule.

La cellule peut comprendre deux polariseurs rectilignes croisés (34, 36), trois plaques de verre (6, 8, 14) munies d'électrodes transparentes et placées entre ces polariseurs, deux couches (2, 4) du cristal liquide entre les plaques et, entre une plaque et un polariseur, une lame (38) du milieu, ayant son axe extraordinaire perpendiculaire aux plaques. Cette lame peut être obtenue par chauffage d'un polymère thermoplastique jusqu'à l'état isotrope, sous pression uniforme sur les polariseurs, refroidissement et suppression de la pression. La cellule est conçue pour que les molécules des couches respectives basculent suivant deux directions faisant le même angle avec la direction d'homéotropie, lorsqu'une tension d'excitation est appliquée entre les électrodes, ces directions, vues en projection sur une plaque, étant en outre opposées dans le plan d'observation principal. Application à la réalisation d'écrans de télévision.

FIG. 7

**Description**

CELLULE A DOUBLE COUCHE DE CRISTAL LIQUIDE, UTILISANT L'EFFET DE BIREFRINGENCE CONTROLEE ELECTRIQUEMENT ET PROCEDE DE FABRICATION D'UN MILIEU UNIAXE D'ANISOTROPIE OPTIQUE NEGATIVE, UTILISABLE DANS CETTE CELLULE.

La présente invention concerne une cellule à double couche de cristal liquide, utilisant l'effet de biréfringence contrôlée électriquement et un procédé de fabrication d'un milieu uniaxe d'anisotropie optique négative, utilisable dans cette cellule. Elle s'applique notamment à la réalisation de dispositifs d'affichage de données tels que des écrans matriciels et en particulier à la réalisation d'écrans de télévision.

On connaît déjà des cellules à cristal liquide utilisant l'effet de biréfringence contrôlée électriquement. Cet effet a déjà permis de réaliser des écrans matriciels à cristaux liquides et a déjà fait l'objet de publication telles que l'article de J.ROBERT intitulé "T V. image with L.C D.", publié dans la revue IEEE Transactions on Electron Devices, vol.Ed 26, n°8, Août 1979, et l'article de J.F. CLerc intitulé "Electrooptical limits of the E.C.B. effect in nematic liquid crystal", publié dans la revue Display's, octobre 1981..

Une cellule à cristal liquide utilisant l'effet de biréfringence contrôlée électriquement comprend par exemple, selon l'état de la technique, une couche de cristal liquide nématique comprise entre deux plaques de verre munies d'électrodes transparentes. Deux moyens de polarisation, par exemple deux polariseurs rectilignes croisés, sont respectivement disposés de part et d'autre de l'ensemble ainsi obtenu. Lorsqu'aucune tension électrique n'est appliquée entre les électrodes, les molécules de la couche de cristal sont sensiblement parallèles à une direction appelée "direction d'homéotropie" et perpendiculaire aux plaques de verre, et une lumière incidente ne peut traverser la cellule. Lorsqu'une tension électrique appropriée est appliquée entre les électrodes, les molécules de la couche de cristal liquide s'orientent sensiblement suivant une direction faisant avec la direction d'homéotropie un angle qui est fonction de la tension appliquée ou tension d'excitation. Une lumière incidente peut alors traverser au moins en partie la cellule. Il est donc possible de commander électriquement l'intensité lumineuse transmise à travers cette cellule, cette intensité étant fonction de ladite tension.

Les cellules à cristal liquide utilisant l'effet de biréfringence contrôlée électriquement présentent l'inconvénient suivant : le contraste de ces cellules, observées obliquement, se dégrade, et ce d'autant plus que l'angle d'observation est important, ce contraste pouvant même s'inverser pour certains angles d'observation.

Dans la demande de brevet français n°8407767 du 18 mai 1984, est proposée une cellule à cristal liquide utilisant l'effet de biréfringence contrôlée électriquement et visant à remédier à cet inconvénient.

Les cellules du genre de celle qui est décrite dans cette demande peuvent être réalisées avec d'importantes épaisseurs de cristal liquide, requises pour la fabrication d'écrans complexes (comportant un grand nombre de pixels).

Cependant, l'utilisation de fortes épaisseurs de cristal liquide pour réaliser la cellule conduit à des mouvements moléculaires lents au sein de cette cellule et donc à des temps de réponse optique lents de la part de celle-ci, ces temps étant seulement compatibles avec une cadence de l'ordre de 10 images par seconde et donc incompatibles avec une application de ladite cellule à la réalisation d'écrans de télévision.

De plus, l'utilisation de fortes épaisseurs de cristal liquide conduit à des effets visuels parasites autour des points-images d'une telle cellule, les contours de ces points étant "blancs" même lorsque la cellule est dans l'état "noir" (correspondant à une tension électrique entre les électrodes de la cellule, inférieure à une tension de seuil).

La présente invention a justement pour but de remédier aux inconvénients que constituent la lenteur de la réponse optique et la présence d'effets visuels parasites autour des points-images d'une cellule à cristal liquide utilisant l'effet de biréfringence contrôlée électriquement, en prévoyant non pas une mais deux couches de cristal liquide nématique dans cette cellule.

De façon précise, la présente invention a pour objet une cellule à cristal liquide utilisant l'effet de biréfringence contrôlée électriquement, caractérisée en ce qu'elle comprend un ensemble dont l'un des côtés est destiné à être exposé à une lumière incidente et qui comporte :

- une première couche de cristal liquide nématique,
- un premier groupe d'électrodes comprenant au moins une première et une deuxième électrodes transparentes qui sont placées de part et d'autre de la première couche, la première électrode étant dudit côté,
- une deuxième couche dudit cristal liquide, parallèle à la première couche et séparée de celle-ci, cette deuxième couche étant placée du côté de la deuxième électrode du premier groupe, et
- un deuxième groupe d'électrodes comprenant au moins une première et une deuxième électrodes qui sont placées de part et d'autre de la deuxième couche, la première électrode du deuxième groupe étant du côté de la deuxième électrode du premier groupe, au moins la première électrode du deuxième groupe étant transparente,
et en ce que la cellule comprend en outre, au moins dudit côté de l'ensemble, destiné à être exposé à la lumière incidente, un moyen de polarisation de celle-ci, les molécules des couches étant sensiblement orientées suivant une direction d'homéotropie en l'absence de tension électrique entre les première et deuxième électrodes, dans chaque groupe, les axes des molécules de la première couche étant sensiblement parallèles à un premier axe lorsqu'une tension d'excitation est appliquée entre la première et la deuxième électrodes du premier groupe et les axes des molécules de la deuxième couche étant sensiblement parallèles à un deuxième axe lorsque ladite tension d'excitation est appliquée entre la deuxième et la première électrodes du deuxième groupe.

Les épaisseurs des couches peuvent être différentes l'une de l'autre mais, de préférence, elles sont sensiblement égales, notamment pour éviter une hétérogénéité de contraste lors d'observations de la cellule suivant deux directions symétriques l'une de l'autre par rapport à un plan perpendiculaire au plan d'observation principal de la cellule, dont la définition sera rappelée par la suite.

Des structures comportant deux couches de cristal liquide superposées sont déjà connues, mais dans des domaines très différents que constituent l'affichage dichroïque et l'affichage smectique ferroélectrique, et pour résoudre des problèmes très différents de ceux que l'on vient d'exposer à propos des cellules utilisant l'effet de biréfringence contrôlée électriquement.

L'utilisation d'une double couche de cristal liquide pour réaliser de telles cellules est très avantageuse.

En considérant par exemple une cellule selon l'invention comportant deux couches de cristal liquide de même épaisseur e, et correspondant ainsi à une cellule de l'art antérieur à simple couche d'épaisseur 2e, le temps de commutation de la cellule selon l'invention est quatre fois plus petit que celui de la cellule de l'art antérieur, ce temps de commutation étant proportionnel au carré de l'épaisseur d'une couche individuelle considérée.

En outre, la largeur des contours lumineux parasites mentionnés plus haut étant à peu près proportionnelle à l'épaisseur de la couche individuelle considérée, la lumière parasite qui est due aux effets de bord des points-images est également deux fois plus faible pour la cellule selon l'invention que pour la cellule correspondante de l'art antérieur.

Selon un mode de réalisation préféré de la cellule objet de l'invention, cette cellule comprend en outre des moyens de compensation de la biréfringence que présente l'ensemble des deux couches de cristal liquide dans sa structure homéotrope et la cellule est prévue pour que, lors de l'application de la tension d'excitation, les premier et deuxième axes fassent le même angle avec la direction d'homéotropie et se projettent, parallèlement à cette dernière et sur un plan qui lui est perpendiculaire, respectivement suivant deux axes de même direction et de sens opposés, parallèles au plan d'observation principal de la cellule.

Une telle cellule conduit en effet à un résultat inattendu : cette cellule à double couche munie de moyens de compensation conduit, pour une observation sous un angle donné, à un contraste nettement meilleur que le contraste obtenu avec une cellule utilisant l'effet de biréfringence contrôlée électriquement, décrite dans la demande de brevet français n°8407767, à épaisseur totale de cristal liquide égale, bien qu'une cellule à simple couche d'épaisseur e, non munie de moyens de compensation, conduise, pour un angle d'observation donné, à un meilleur contraste qu'une cellule selon l'invention ayant une épaisseur totale e de cristal liquide et non munie de moyens de compensation.

Dans un mode de réalisation particulier de la cellule objet de l'invention, l'épaisseur égale à la somme des épaisseurs des couches de cristal liquide, et chaque moyen de polarisation sont prévus pour réaliser, ensemble, ladite compensation.

Dans une première réalisation particulière correspondant à ce mode de réalisation particulier, les électrodes sont transparentes, la cellule comprend un premier et un second moyens de polarisation situés de part et d'autre dudit ensemble et équivalents à des polariseurs quasi-circulaires complémentaires l'un de l'autre, vis-à-vis d'une onde lumineuse plane incidente, se propageant suivant la direction d'homéotropie, chacun des premier et second moyens de polarisation étant en outre apte à donner à une onde lumineuse plane tombant obliquement sur lui suivant le plan d'observation principal, une polarisation elliptique telle que le grand axe de l'ellipse de polarisation forme un angle avec le plan d'observation principal, et la somme des épaisseurs des couches de cristal liquide est égale au double de l'épaisseur particulière que l'ensemble des deux couches devrait avoir pour annuler cet angle lorsque l'onde tombant obliquement a parcouru toute cette épaisseur particulière.

Dans une seconde réalisation particulière correspondant à ce même mode de réalisation particulier, la deuxième électrode du deuxième groupe est optiquement réflectrice, le moyen de polarisation est apte à polariser circulairement une onde lumineuse plane incidente, se propageant suivant la direction d'homéotropie, et à donner à une onde lumineuse plane tombant obliquement sur lui, suivant le plan d'observation principal, une polarisation elliptique telle que le grand axe de l'ellipse de polarisation forme un angle avec le plan d'observation principal, et l'épaisseur égale à la somme des épaisseurs des couches de cristal liquide est telle qu'elle annule cet angle lorsque l'onde tombant obliquement a parcouru toute cette épaisseur.

Dans un autre mode de réalisation particulier, les moyens de compensation comprennent au moins une couche d'un milieu de compensation ayant trois indices optiques principaux dont l'un est plus faible que les deux autres, l'axe correspondant à cet indice étant parallèle à la direction d'homéotopie.

L'utilisation de cette couche d'un milieu de compensation de la biréfringence (des deux couches de cristal liquide nématique dans leur structure homéotrope, pour une observation oblique de la cellule) permet de conserver un contraste élevé lors d'observations de la cellule sous des angles importants pouvant aller jusqu'à 70°.

En outre, on a constaté que la cellule proposée dans la demande de brevet français n°8407767 présente plusieurs inconvénients : elle nécessite une épaisseur déterminée de la couche de cristal liquide, permet une compensation efficace de la biréfringence de cette couche seulement dans deux plans d'incidence de la lumière et au voisinage de ces plans, et présente des défauts de chromaticité, l'extinction étant moins bonne pour certaines longueurs d'onde lumineuses que pour d'autres.

Dans cet autre mode de réalisation particulier, la cellule objet de l'invention ne présente pas les défauts de chromaticité en question, permet une compensation efficace de la biréfringence dans tout plan d'incidence de la lumière et peut être réalisée avec toute épaisseur de cristal liquide, l'épaisseur de la couche de milieu de compensation étant bien entendu ajustée, en vue d'une compensation optimale, en fonction de l'épaisseur totale de cristal liquide.

En outre, la cellule selon l'invention, correspondant à cet autre mode de réalisation particulier, est avantageusement compatible avec tout moyen de polarisation (rectiligne, circulaire, ou elliptique).

On peut ainsi réaliser, selon la présente invention, des dispositifs d'affichage qui non seulement comportent une forte épaisseur de cristal liquide et peuvent donc avoir un taux de multiplexage élevé mais encore sont achromatiques, préservant ainsi la pureté des couleurs affichées et la stabilité de ces couleurs sous observation oblique.

La cellule selon l'invention correspondant à cet autre mode de réalisation particulier, peut avoir ses électrodes transparentes et comprendre deux moyens de polarisation complémentaires l'un de l'autre, situés de part et d'autre dudit ensemble, chaque couche de milieu de compensation étant comprise entre l'un des moyens de polarisation et ledit ensemble.

Par "moyens de polarisation complémentaires l'un de l'autre", on entend par exemple deux polariseurs rectilignes croisés, ou deux polariseurs circulaires ou elliptiques complémentaires l'un de l'autre vis-à-vis d'une onde lumineuse plane incidente se propageant suivant la direction d'homéotropie, ou plus brièvement, respectivement gauche et droit vis-à-vis de cette onde.

Dans une réalisation particulière, les deux moyens de polarisation complémentaires sont des polariseurs rectilignes croisés et le milieu de compensation est un milieu uniaxe d'anisotropie optique négative, ayant un axe de symétrie parallèle à la direction d'homéotropie et un axe extraordinaire parallèle à cet axe de symétrie.

Dans une autre réalisation particulière, les deux moyens de polarisation complémentaires sont des polariseurs circulaires complémentaires l'un de l'autre et le milieu de compensation est un milieu uniaxe d'anisotropie optique négative, ayant un axe de symétrie parallèle à la direction d'homéotropie et un axe extraordinaire parallèle à cet axe de symétrie.

Dans ces deux réalisations particulières, le milieu de compensation est, de préférence, fait à partir d'un matériau polymère thermo-plastique. Un tel polymère permet en effet de réaliser, de façon assez simple comme on le verra par la suite, une couche qui permet non seulement de compenser la biréfringence mais encore de coller l'un à l'autre deux composants de la cellule entre lesquels elle se trouve.

Dans une autre réalisation particulière, les deux moyens de polarisation complémentaires sont des polariseurs rectilignes croisés et le milieu de compensation est un milieu biaxe dont l'axe de plus faible indice est parallèle à la direction d'homéotropie.

De préférence, le produit de l'épaisseur de chaque couche de ce milieu par la valeur absolue de la différence entre les deux autres indices principaux de ce milieu est de l'ordre de 0,125 micromètre, ce qui permet à cette couche de constituer dans le domaine visible une lame à retard quasi quart d'onde.

Dans une réalisation particulière de l'invention, correspondant à une cellule selon l'invention, qui est réalisée selon ledit autre mode de réalisation particulier et comporte deux moyens de polarisation complémentaires, et dont les électrodes sont transparentes, ladite cellule comprend en outre une couche optiquement réflectrice placée à une extrémité de la cellule, du côte opposé à celui qui est destiné à être exposé à une lumière incidente.

La présente invention a également pour objet un procédé de fabrication d'une couche d'un milieu uniaxe d'anisotropie optique négative, ayant un axe de symétrie perpendiculaire à ladite couche et un axe extraordinaire parallèle à cet axe de symétrie, procédé caractérisé en ce qu'il comprend les étapes successives suivantes :
- on soumet chaque côté d'une couche (simple ou multiple) d'un matériau polymère thermoplastique, maintenue plane, à une pression uniforme,
- on effectue un chauffage de la couche maintenue dans cet état de pression jusqu'à ce qu'elle passe de sa phase vitreuse à sa phase isotrope,
- on cesse le chauffage, et
- l'on supprime la pression.

Un tel procédé permet d'obtenir assez simplement ladite couche d'un milieu uniaxe d'anisotropie optique négative, qui est utilisable dans certaines réalisations de la cellule objet de l'invention.

Cette couche de milieu uniaxe peut être maintenue plane au moyen de deux substrats plans, transparents et rigides, entre lesquels elle est placée.

La présente invention sera mieux comprise à la lecture de la description qui suit, d'exemples de réalisation donnés à titre purement indicatif et nullement limitatif, en référence aux dessins annexés sur lesquels :
- la figure 1 est une vue schématique et partielle d'une cellule selon l'invention, montrant les deux couches de cristal liquide superposées,

la figure 2 illustre la définition du plan d'observation principal de cette cellule,
- la figure 3 montre les deux couches de cristal liquide de cette cellule dans leur structure homéotrope,
- la figure 4 illustre le basculement des molécules de ces couches sous l'effet d'une tension d'excitation,
- la figure 5 est une vue schématique d'un mode de réalisation particulier de la cellule objet de l'invention, qui fonctionne en transmission et dans lequel la compensation de la biréfringence fait intervenir l'épaisseur totale de cristal liquide,
- la figure 6 est une vue schématique d'un autre mode de réalisation particulier qui fonctionne en réflexion et dans lequel la compensation de la biréfringence fait également intervenir l'épaisseur totale de cristal liquide,

- la figure 7 est une vue schématique d'un autre mode de réalisation particulier utilisant une lame d'un milieu uniaxe d'anisotropie optique négative pour compenser la biréfringence,

- la figure 8 est une vue schématique d'un autre mode de réalisation particulier utilisant deux lames d'un matériau biaxe pour compenser cette biréfringence,

- la figure 9 est une vue schématique d'un autre mode de réalisation particulier utilisant deux lames d'un milieu uniaxe d'anisotropie optique négative pour compenser la biréfringence,

- la figure 10 montre les variations de l'intensité relative transmise par une cellule selon l'invention non munie de moyens de compensation, en fonction de l'angle d'observation, et dans deux plans perpendiculaires dont l'un est le plan d'observation principal de cette cellule,

- la figure 11 représente ces mêmes variations lorsque la cellule est munie de moyens de compensation,

- la figure 12 illustre schématiquement un mode de mise en oeuvre particulier du procédé objet de l'invention permettant la fabrication d'une couche d'un milieu uniaxe d'anisotropie optique négative, utilisable dans la présente invention, et

- la figure 13 est une vue schématique d'une cellule selon la présente invention, illustrant l'intégration de la fabrication de plusieurs couches de milieu uniaxe d'anisotropie optique négative, à l'étape de scellement de cette cellule.

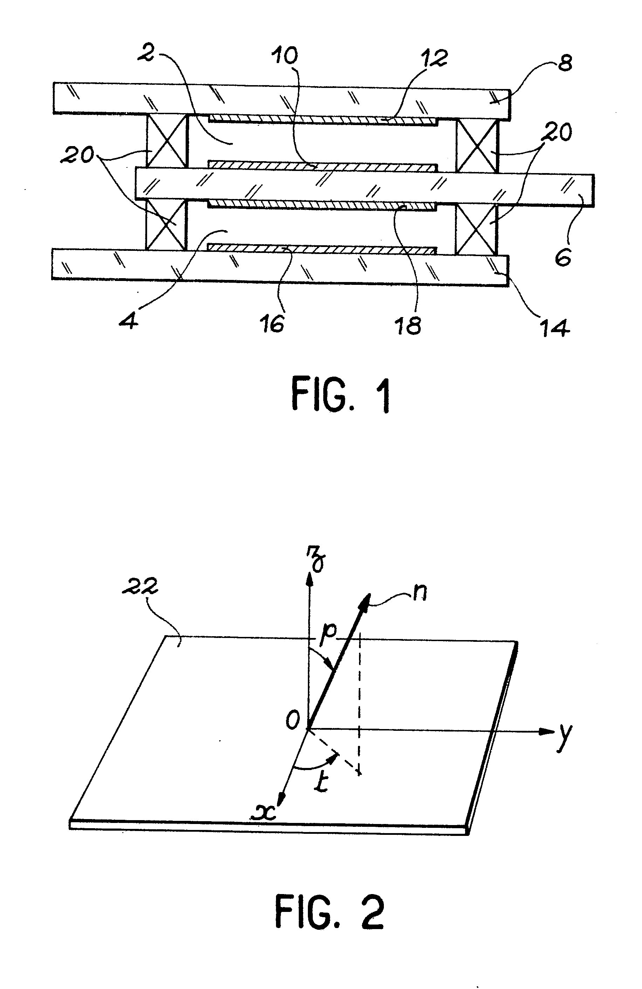

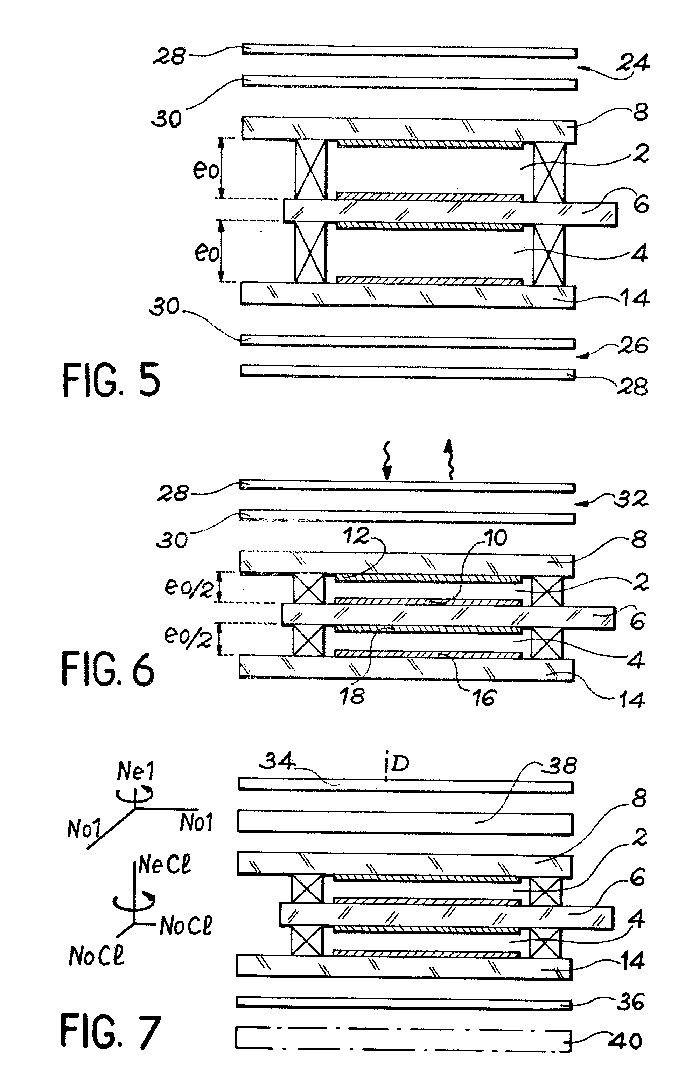

Sur la figure 1, on a représenté schématiquement un ensemble qui est commun aux cellules selon l'invention, représentées schématiquement sur les figures 5 à 9 et 13.

Cet ensemble comprend une première couche 2 et une seconde couche 4 de cristal liquide nématique. La première couche 2 est comprise entre une première plaque ou plaque centrale 6 et une seconde plaque ou plaque supérieure 8, parallèles et transparentes, par exemple en verre. Des électrodes 10 et 12 transparentes sont respectivement disposées sur les faces des plaques 6 et 8, qui sont directement en regard l'une de l'autre.

La seconde couche 4 est comprise entre la plaque centrale 6 et une troisième plaque ou plaque inférieure 14 transparente (par exemple en verre) et parallèle à la plaque 6. Des électrodes 16 et 18 transparentes (sauf pour la cellule de la figure 6, pour laquelle l'électrode 18 est transparente et l'électrode 16 réflectrice) sont respectivement disposées sur les faces des plaques 14 et 6, qui sont directement en regard l'une de l'autre.

Des moyens de scellement 20 sont prévus entre les plaques 6 et 8 et entre les plaques 6 et 14 afin de contenir les couches de cristal liquide correspondantes entre ces plaques.

La plaque 8 peut être à l'aplomb de la plaque 14, la plaque 6 étant alors décalée parallèlement à ces plaques 8 et 14, pour permettre l'établissement d'une liaison électrique entre les électrodes 10 et 18, dont il sera question par la suite.

Bien entendu, dans le cas de la réalisation d'un écran matriciel, la cellule comprend plus de 4 électrodes : dans ce cas, on peut remplacer l'électrode 10 et l'électrode 18 respectivement par deux rangées d'électrodes parallèles et en regard les unes des autres, correspondant aux colonnes de l'écran, et les électrodes 12 et 16 respectivement par deux rangées (perpendiculaires aux précédentes rangées) d'électrodes parallèles et en regard les unes des autres, correspondant aux lignes de l'écran, une intersection d'une ligne et d'une colonne correspondant à la couche 2 de cristal liquide étant ainsi à l'aplomb d'une intersection homologue d'une ligne et d'une colonne correspondant à la couche 4.

Sur la figure 2, on a représenté l'écran de lecture 22 d'une cellule selon l'invention. Lorsqu'une lumière incidente parvient à la cellule représentée sur la figure 1, du côté de la plaque 8 de celle-ci, l'écran 22 est du côté de la plaque 14 pour une cellule fonctionnant en mode transmissif et du côté de la plaque 8 pour une cellule fonctionnant en mode réflectif.

Le plan d'observation principal est perpendiculaire au plan de l'écran 22 et correspond à la position la plus probable du lecteur de cet écran.

On peut ainsi définir un repère Oxyz dont le centre O correspond par exemple au centre de l'écran 22, l'axe Ox correspondant à une verticale de l'écran et étant orientée vers le bas de celui-ci, l'axe Oy correspondant à une horizontale (lignes) de l'écran et étant orienté vers la droite de celui-ci et l'axe Oz étant perpendiculaire à l'écran et orienté vers un lecteur de cet écran.

Etant donné une molécule de l'une des couches de cristal liquide, l'axe directeur n de cette molécule peut être repéré par un angle p que cet axe n fait avec l'axe Oz et par un angle t que fait, avec l'axe Ox, la projection de l'axe n sur le plan xOy parallèlement à l'axe Oz.

Le plan xOy est parallèle au plan de l'écran 22 et le plan xOz correspond au plan d'observation principal de la cellule, la direction d'homéotropie étant parallèle à Oz.

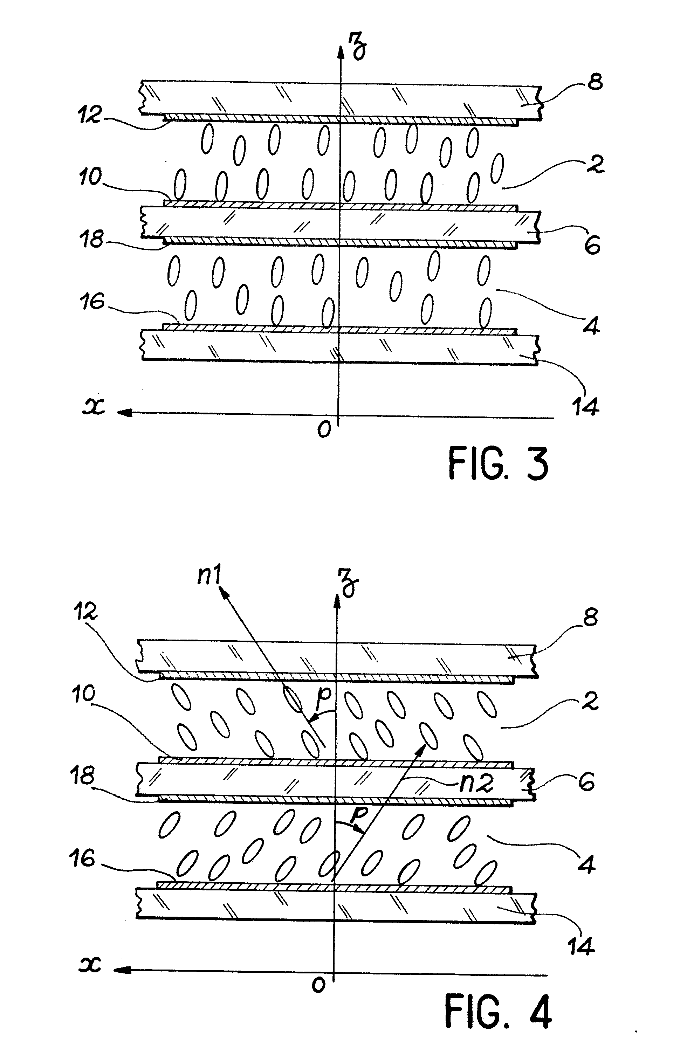

Sur la figure 3, la cellule décrite en référence à la figure 1 est représentée dans son état de repos. Aucune tension électrique n'est appliquée entre les électrodes de la cellule. Les axes directeurs des molécules des couches 2 et 4 sont alors sensiblement parallèles à l'axe Oz. En fait, comme on le verra par la suite, ils sont très légèrement inclinés par rapport à cet axe Oz, d'un angle p qui peut être de l'ordre de 1 à 2 degrés.

Une liaison électrique étant prévue entre lesdites électrodes 10 et 18, la cellule est conçue pour que, par application d'une tension électrique V entre les électrodes 12 et 10 d'une part et, simultanément, entre les électrodes 16 et 18 d'autre part, les axes n1 des molécules de l'une des couches de cristal liquide, par exemple la couche 2 (figure 4), fassent un certain angle p avec l'axe Oz et un angle t nul avec l'axe Ox, et pour que les axes n2 des molécules de l'autre couche (la couche 4 dans l'exemple donné) fassent le même angle p avec l'axe Oz mais un angle t égal à 180 degrés avec l'axe Ox. (Compte tenu de l'orientation de l'axe Oz sur la figure 3, la cellule représentée sur cette figure fonctionne en mode réflectif mais la conception expliquée présentement est également valable pour une cellule selon l'invention, fonctionnant en mode transmissif).

L'obtention du même angle p pour les deux couches résulte de l'application de la même tension V entre les électrodes de chaque couche.

L'obtention d'angles t respectivement égaux à 0 et à 180 degrés (les angles t étant indépendants de la tension électrique appliquée) dépend de l'angle (très faible) dont sont inclinées les molécules par rapport à la direction d'homéotropie en l'absence de tension électrique.

Les valeurs de 0 et 180 degrés pour les angles t respectifs des couches, sont obtenues par une préparation convenable des plaques 6, 8 et 14 selon une technique décrite dans la demande de brevet français no8417794 du 22 novembre 1984.

Selon cette technique, une couche d'orientation est déposée sur chacune de ces plaques, par passage de cette plaque dans un groupe de dépôt, la plaque passant devant une cible dans ce groupe, d'où un effet d'angle d'incidence sur cette plaque.

Le sens de défilement de la plaque impose l'angle t. Plus précisément, les angles t = 0 degré et t = 180 degrés sont obtenus par un choix convenable du sens de défilement de la plaque correspondante dans le groupe de dépôt.

Les plaques 8 et 14, qui nécessitent simplement le dépôt d'une couche de préparation (sur leur face destinée a être en regard de la couche correspondante de cristal liquide) ont le même sens de défilement (premier sens).

Quant à la plaque 6, chacune de ses faces est revêtue d'une couche d'orientation et l'on fait circuler successivement chacune des faces de cette plaque 6 dans le groupe d'orientation suivant un même sens (second sens), contraire au premier sens.

Sur la figure 5, on a représenté schématiquement une cellule correspondant à un premier mode de réalisation particulier de l'invention. Cette cellule fonctionne en mode transmissif, toutes ses électrodes étant transparentes. En outre, cette cellule est l'homologue de la cellule représentée sur la figure 4 de la demande de brevet français no8407767 en ce sens qu'elle en diffère essentiellement par le fait qu'elle utilise les deux couches 2 et 4 alors que la cellule de la demande en question utilise une simple couche de cristal liquide.

Plus précisément, la cellule représentée sur la figure 5 comprend les couches de cristal liquide 2 et 4 comprises entre les plaques 6, 8 et 14, ainsi qu'un premier polariseur circulaire 24 et un second polariseur circulaire 26 complémentaires l'un de l'autre, qui encadrent l'ensemble constitué par les plaques et les couches et sont parallèles à ces plaques.

La somme des épaisseurs des couches 2 et 4 est égale au double de l'épaisseur $e_0$ dont il est question à la page 13 de la demande de brevet français no8407767. Il est ainsi possible de donner à chacune des couches 2 et 4 une même épaisseur égale à $e_0$.

Bien entendu, chaque polariseur circulaire 24 ou 26 est réalisable au moyen d'un polariseur rectiligne 28 suivi d'une lame quart d'onde 30 qui est réalisée dans un milieu uniaxe d'anisotropie optique positive, le grand axe de ce milieu étant compris dans le plan du polariseur 28 et formant avec la direction de polarisation de ce polariseur 28 un angle de 45 degrés.

Sur la figure 6, on a représenté schématiquement une cellule selon l'invention, correspondant à un autre mode de réalisation particulier de celle-ci. Cette cellule fonctionne en mode réflectif et ses électrodes 10, 12 et 18 sont transparentes alors que l'électrode 16 est optiquement réflectrice.

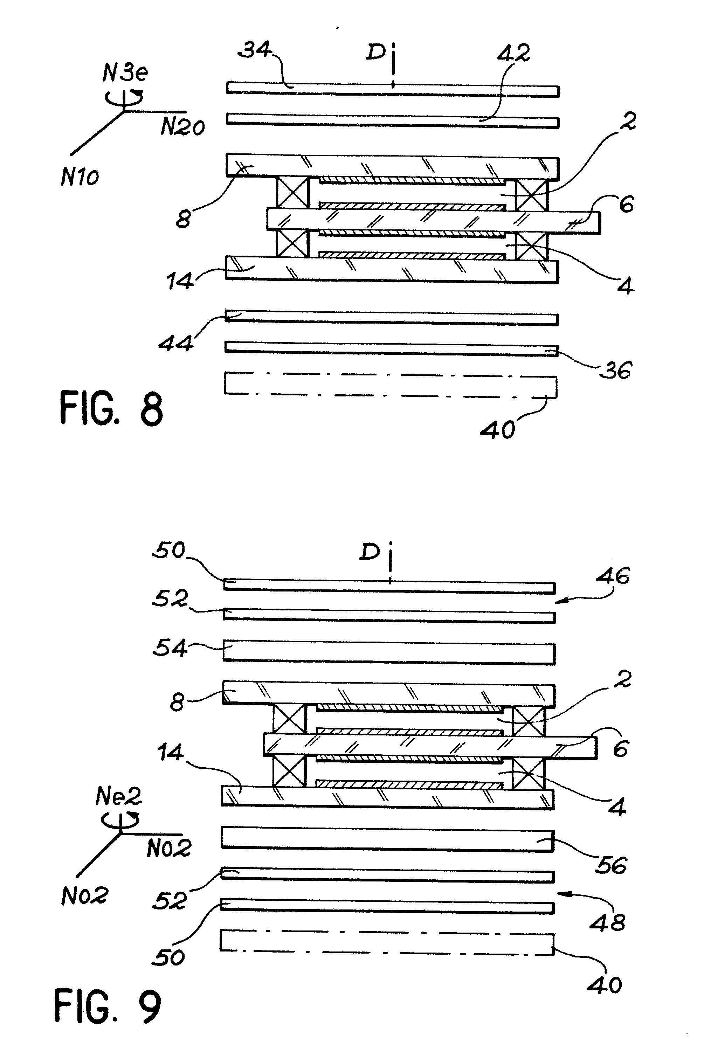

Cette cellule est l'homologue de la cellule représentée sur la figure 8 de la demande de brevet français no8407767 et en diffère essentiellement par le fait qu'elle utilise deux couches 2 et 4 de cristal liquide alors que la cellule de la demande en question utilise une simple couche.

Plus précisément, la cellule représentée sur la figure 6 comprend, outre l'ensemble des plaques 6, 8 et 14 et des couches 2 et 4, un polariseur circulaire 32 composé, comme on l'a vu plus haut, d'un polariseur rectiligne 28 suivi d'une lame quart d'onde 30. Le polariseur 32 est disposé en regard de la plaque 8, parallèlement à celle-ci, de telle sorte qu'une lumière incidente traverse successivement le polariseur 28, la lame 30, les couches 2 et 4 pour se réfléchir sur l'électrode 16 et retraverser la cellule que l'on observe alors à travers le polariseur 28.

La somme des épaisseurs des couches 2 et 4 est dans le cas présent égale à l'épaisseur $e_0$ mentionnée plus haut (voir la demande de brevet français no8407767 p.15), de sorte que l'épaisseur de chacune des couches 2 et 4 peut être prise égale à $e_0/2$.

Sur la figure 7, on a représenté schématiquement une cellule à cristal liquide correspondant à un autre mode de réalisation particulier de l'invention. Cette cellule comprend l'ensemble des couches 2 et 4 de cristal liquide et des plaques 6, 8 et 14. En outre, toutes les électrodes de la cellule sont transparentes.

Un premier et un second polariseurs rectilignes croisés 34 et 36 encadrent ledit ensemble, le premier polariseur 34 étant du côté de la plaque 8 et le second polariseur 36 étant du côté de la plaque 14. La cellule est destinée à être éclairée par une lumière qui tombe sur le premier polariseur 34 et observée à travers le second polariseur 36. Ces deux polariseurs se présentent sous la forme de lames qui sont parallèles aux plaques.

La cellule comprend en outre une lame ou feuille 38 d'un milieu de compensation, qui est disposée entre la plaque 8 et le polariseur 34, parallèlement à ceux-ci, et sur laquelle des précisions seront données par la suite.

La cellule que l'on vient de décrire fonctionne en mode transmissif. Elle pourrait fonctionner en mode réflectif en lui ajoutant une couche optiquement réflectrice 40 disposée à l'opposé de la plaque 14 par rapport au polariseur 36, parallèlement à celui-ci, et en observant alors la cellule à travers le premier polariseur 34.

Les couches de cristal liquide utilisées ont par exemple la même épaisseur et sont des couches de cristal liquide nématique d'anisotropie diélectrique négative, dont les molécules sont sensiblement orientées suivant la direction d'homéotropie D, en l'absence de tension électrique entre les électrodes. Chaque couche de cristal liquide nématique est en outre un milieu uniaxe d'anisotropie optique positive, l'indice extraordinaire NeCl de ce milieu étant supérieur à son indice ordinaire NoCl. L'ellipsoïde des indices de ce milieu a un axe de symétrie qui est l'axe de fort indice (NeCl dans le cas présent), et qui est parallèle aux grands axes des molécules de cristal liquide, ainsi qu'à la direction d'homéotropie en l'absence de tension électrique entre les électrodes.

La lame 38 de compensation est un milieu uniaxe d'anisotropie optique négative, l'indice extraordinaire Ne1 de ce milieu étant inférieur à son indice ordinaire No1. L'ellipsoïde des indices de ce milieu a un axe de symétrie qui est l'axe de faible indice (Ne1 dans le cas présent) et qui est parallèle à la direction d'homéotropie.

A titre purement indicatif et nullement limitatif, chaque couche de cristal liquide est réalisée à partir du matériau commercialisé par la Société MERCK sous la référence ZLI 1936 (avec NeCl-NoCl = 0,19) et a une épaisseur de 2,5 micromètres, et la lame 38 est un empilement de 15 feuilles de 80 micromètres d'épaisseur chacune, du polymère thermoplastique commercialisé par la Société Dupont de Nemours sous la marque SURLYN.

En fait, l'épaisseur optimale de la lame 38 dépend de l'épaisseur totale de cristal liquide (loi linéaire) et cette épaisseur de la lame 38 est déterminable expérimentalement, en fixant l'épaisseur totale de cristal liquide et en cherchant l'épaisseur de la lame 38 qui conduit à un contraste optimal sous un angle d'observation donné.

En outre, la lame 38 pourrait être disposée entre la plaque 14 et le polariseur 36 au lieu d'être disposée entre la plaque 8 et la polariseur 34.

Plus généralement, il est possible de remplacer la lame 38 par une pluralité de couches disposées les unes entre la plaque 8 et le polariseur 34 et les autres entre la plaque 14 et le polariseur 36, l'épaisseur totale de ces couches étant égale à l'épaisseur déterminée pour la lame 38.

Sur la figure 8, on a représenté schématiquement un autre mode de réalisation particulier de la cellule objet de l'invention. La cellule représentée sur la figure 8 comporte l'ensemble des couches de cristal liquide 2 et 4 et des plaques de verre 6, 8 et 14 munies d'électrodes transparentes, ainsi que deux polariseurs 34 et 36 rectilignes croisés et éventuellement une couche optiquement réflectrice 40 (pour un fonctionnement en mode réflectif, la cellule étant alors éclairée par une lumière tombant sur le polariseur 34 et également observée à travers celui-ci), dont la disposition relative a déjà été indiquée dans la description de la figure 7.

La cellule représentée sur la figure 8 comporte en outre une lame 42 disposée entre la plaque 8 et le polariseur 34 et une lame 44 disposée entre la plaque 14 et le polariseur 36, ces lames 42 et 44 étant parallèles aux plaques 6, 8 et 14. Les caractéristiques optiques des couches de cristal liquide nématique 2 et 4 ont déjà été indiquées dans la description de la figure 7.

Chaque lame 42 ou 44 est quant à elle un milieu biaxe qui a deux indices principaux N1o et N2o ayant des valeurs proches l'une de l'autre et un troisième indice N3e inférieur à N1o et N2o, l'axe de faible indice (N3e) étant parallèle à la direction d'homéotropie.

De préférence, les lames 42 et 44 ont des épaisseurs sensiblement égales et le produit de la valeur absolue de (N1o-N2o) par l'une ou l'autre de ces épaisseurs est choisi de façon à être peu différent de 0,125 micromètre (condition 1) pour chacune des lames 42 et 44 qui constitue alors, dans le domaine visible, une lame à retard quasi quart d'onde.

Cette valeur de 0,125 micromètre correspond au maximum de brillance de la cellule représentée sur la figure 8, dans l'état "blanc" correspondant à la cellule sous tension d'excitation.

L'épaisseur optimale de chaque lame 42 ou 44 (conduisant à un contraste optimal pour un angle d'observation et une épaisseur totale de cristal liquide donnés) est déterminable expérimentalement en fonction de l'épaisseur totale choisie pour les couches de cristal liquide. On pourrait d'ailleurs n'utiliser qu'une lame de compensation disposée soit entre la plaque 8 et le polariseur 34, soit entre la plaque 14 et le polariseur 36, cette lame unique ayant alors une épaisseur égale à la somme des épaisseurs des lames 42 et 44, déterminées en fonction de l'épaisseur totale de cristal liquide.

Cependant, dans le mode de réalisation préférentiel indiqué plus haut, l'épaisseur des lames 42 et 44 étant déjà fixée par la condition 1, la compensation optimale de la biréfringence des couches de cristal liquide est déterminée en choisissant un matériau constitutif des lames 42 et 44 qui a un indice extraordinaire N3e optimal pour cette compensation.

A titre purement indicatif et nullement limitatif, chaque couche de cristal liquide est réalisée à partir du matériau commercialisée par la Société MERCK sous la référence ZLI 1936, avec NeCl - NoCl = 0,19, et a une épaisseur comprise entre 2 et 3 micromètres, et chacune des lames 42 et 44 est réalisée à partir d'une feuille de cellophane qui est commercialisée par la Société Rhône Poulenc et qui a une épaisseur de l'ordre de 3,5 à 4 micromètres, l'indice N1o étant égal à 1,660, l'indice N2o étant égal à 1,6425 et l'indice N3e étant égal à 1,5000.

Sur la figure 9, on a représenté schématiquement un autre mode de réalisation particulier de la cellule objet de l'invention. La cellule représentée sur la figure 9 comprend l'ensemble des couches de cristal liquide 2 et 4 et des plaques de verre 6, 8 et 14 munies d'électrodes transparentes, la disposition de ces éléments ayant été expliquée dans la description de la figure 7. Les caractéristiques optiques des couches de cristal liquide 2 et 4 ont été données dans la description de la figure 7.

La cellule représentée sur la figure 9 comprend en outre un premier polariseur circulaire 46 et un second polariseur circulaire 48 qui encadrent ledit ensemble, le premier polariseur 46 étant du côté de la plaque 8, de sorte que ce polariseur reçoit la lumière incidente, et le second polariseur 48 étant du côté de la plaque 14, ces polariseur 46 et 48 étant parallèles aux plaques 6, 8 et 14 et la cellule étant observée à travers le polariseur 48. Les polariseurs 46 et 48 sont en outre complémentaires l'un de l'autre c'est-à-dire que, pour la lumière incidente, l'un des polariseur est gauche et l'autre polariseur est droit.

Comme précédemment, pour un fonctionnement en mode réflectif, une couche optiquement réflectrice 40 peut être prévue à l'opposé de la plaque 14 par rapport au polariseur 48, la cellule étant alors observée à travers le polariseur 46.

Ce polariseur 46 est constitué d'un polariseur rectiligne 50 associé à une lame quart d'onde 52 qui est réalisée dans un milieu uniaxe d'anisotropie optique positive, le grand axe de ce milieu étant compris dans le plan du polariseur 50 (c'est-à-dire perpendiculaire à la direction d'homéotropie) et formant avec la direction de polarisation de ce polariseur 50 un angle de 45°.

De même, le second polariseur circulaire 48 est identique au premier polariseur 46, les lames quart d'onde 52 des polariseur 46 et 48 faisant respectivement face aux plaques 8 et 14.

La cellule représentée sur la figure 9 comprend également au moins une lame d'un matériau uniaxe d'aniotropie optique négative dont les caractéristiques optiques sont celles de la lame 38 décrite en référence à la figure 7 et qui est disposée parallèlement aux plaques 6, 8 et 14 entre l'une de ces plaques et l'un des polariseurs circulaires.

Dans le cas de la figure 9, la cellule comporte deux telles lames 54 et 56, la lame 54 étant disposée entre la plaque 8 et le polariseur 46 et la lame 56 étant disposée entre la plaque 14 et le polariseur 48.

L'épaisseur optimale (contraste optimal sous un angle d'observation donné) de la lame unique 54 ou 56 (ou l'épaisseur optimale totale des lames 54 et 56) est déterminée en fonction de l'épaisseur totale de cristal liquide. L'utilisation d'une ou de plusieurs lames de matériau uniaxe d'anisotropie optique négative dans la cellule de la figure 9 permet de maîtriser séparément :

- l'ellipticité presque circulaire, dans tout le domaine visible, de l'onde qui traverse les couches de cristal liquide (ce qui conduit à un meilleur rendement lumineux dans l'état blanc de la cellule), et

- le comportement compensateur du système comprenant cette lame de matériau uniaxe d'anisotropie optique négative et les deux polariseurs circulaires, la compensation dépendant de la préparation de ladite lame.

Chaque lame de compensation utilisée dans la cellule de la figure 9 est réalisée de la même manière que chaque lame de compensation utilisée dans la cellule de la figure 7 et sa fabrication (de même que celle de chaque lame de la cellule de la figure 7) peut être intégrée à l'étape de scellement de la cellule qui l'utilise, comme on le verra par la suite.

Pour une même épaisseur totale de cristal liquide, l'épaisseur de matériau uniaxe d'anisotropie optique négative, qui est nécessaire pour réaliser la cellule de la figure 9, est inférieure à l'épaisseur dudit matériau qui est nécessaire pour réaliser la cellule représentée sur la figure 7 étant donné l'utilisation, dans la cellule de la figure 9, de lames à retard quart d'onde.

A titre purement indicatif et nullement limitatif, la cellule représentée sur la figure 9 comporte deux couches de cristal liquide de 2,5 micromètres d'épaisseur chacune, réalisées à partir du matériau commercialisé par la Société MERCK sous la référence ZLI 1936, avec NeCl - NoCl = 0,19, chaque polariseur circulaire est du genre de celui qui est commercialisé par la Société POLAROID sous la référence HCP 37 et chacune des lames 54 et 56 est constituée par un empilement de 5 feuilles du matériau commercialisé par la Société Dupont de Nemours sous la référence SURLYN, chaque feuille ou film ayant une épaisseur de 80 micromètres.

On va maintenant montrer l'intérêt d'utiliser une cellule à deux couches qui basculent suivant des sens opposés, selon l'invention, associée à des moyens de compensation de la biréfringence du cristal liquide. On étudie pour cela les variations d'une intensité relative I/Io en fonction d'un angle a, pour une cellule selon l'invention, fonctionnant par exemple en mode transmissif, Io étant l'intensité de la lumière incidente et I l'intensité de la lumière obtenue après traversée de la cellule sous tension d'excitation, l'angle a étant un angle formé entre l'axe Oz et la direction d'observation.

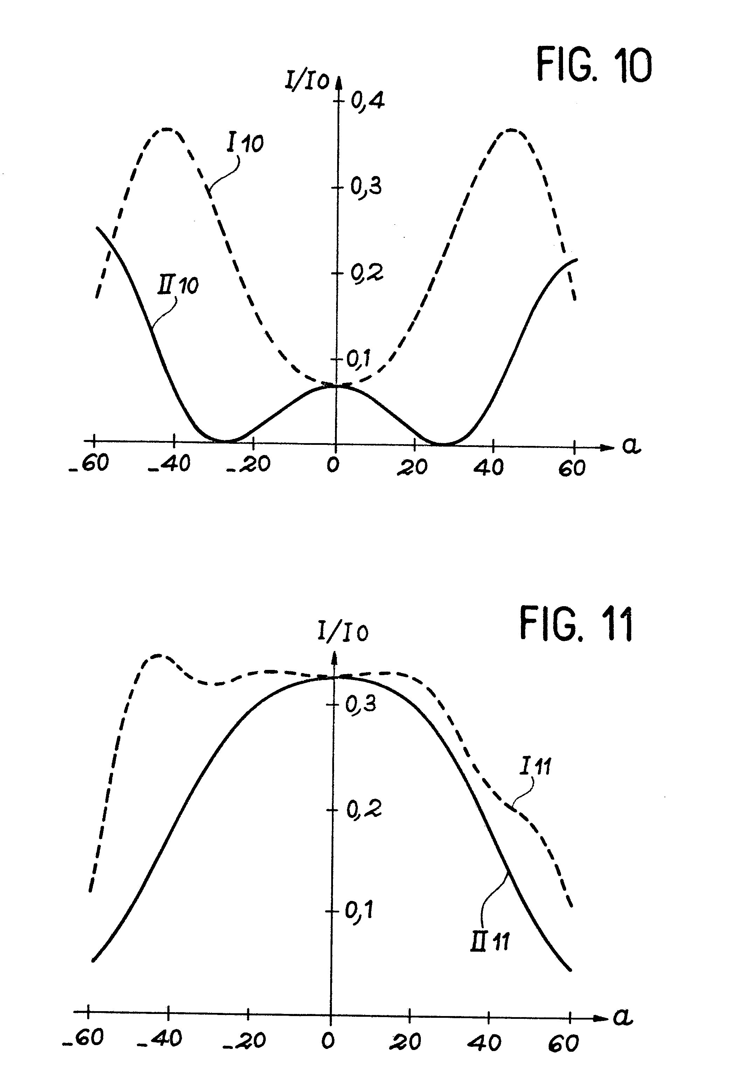

La figure 10 représente ces variations pour une cellule sans moyen de compensation, par exemple du genre de celle qui est représentée sur la figure 7 mais privée de la lame 38. L'angle p de basculement des molécules sous tension d'excitation est égal à 20 degrés. Les variations sont représentées pour une observation dont la direction se situe dans le plan xOz (courbe I10) et pour une direction d'observation se situant dans le plan yOz (courbe II10).

Sur la figure 11, lesdites variations sont représentées pour une cellule du genre de celle qui est représentée sur la figure 7, pour laquelle l'angle p de basculement des molécules sous tension d'excitation est égal à 30 degrés, lesdites variations étant également étudiées pour une direction d'observation comprise dans le plan xOz (courbe I11) et pour une direction d'observation comprise dans le plan yOz (courbe II11).

On constate ainsi la supériorité de la cellule qui a deux couches qui basculent suivant des sens opposés, et qui est munie de moyens de compensation, par rapport à celle qui ne comporte pas de tels moyens. Pour la cellule munie de moyens de compensation, la stabilité de l'état blanc sous incidence est remarquable et les courbes de la figure 11 ne comportent aucun point singulier correspondant à des directions d'observation.

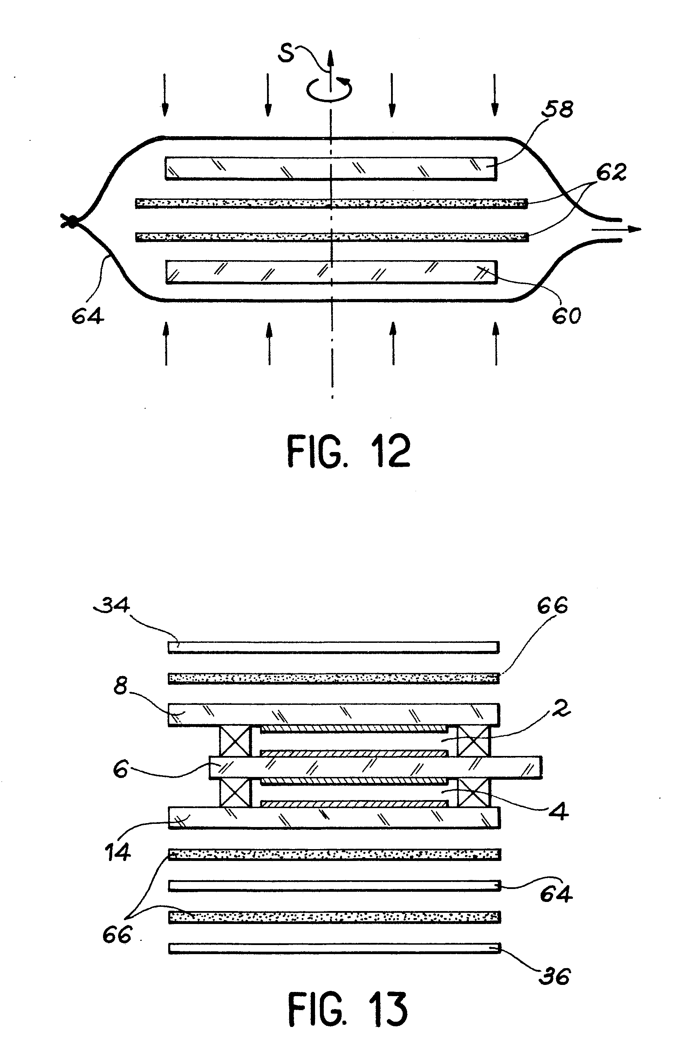

Sur la figure 12, on a illustré schématiquement un procédé de fabrication d'une couche d'un milieu uniaxe d'anisotropie optique négative, présentant un axe de symétrie perpendiculaire à ladite couche, l'axe de plus faible indice de cette couche étant parallèle à cet axe de symétrie. Une telle couche est utilisable dans la réalisation des cellules représentées sur les figures 7 et 9.

Le procédé est le suivant : on dispose entre deux substrat 58 et 60 transparents, plans et rigides, une ou plusieurs feuilles 62 d'un matériau thermoplastique par exemple du genre de celui qui est commercialisé par la Société Dupont de Nemours sous la marque SURLYN. A température ambiante, un tel matériau est à l'état vitreux mais présente une biréfringence qui dépend de son histoire antérieure. Par chauffage à une température appropriée, le matériau passe de l'état vitreux à l'état isotrope, état dans lequel il ne présente plus de biréfringence.

Les substrats 58 et 60 sont par exemple deux plaques de verre du genre des plaques 6, 8 et 14 utilisées dans la cellule décrite en référence à la figure 7.

La ou les feuilles étant disposées entre les substrats, une pression uniforme est appliquée sur chacun desdits substrats (normalement à ceux-ci). Pour ce faire, on peut introduire l'ensemble constitué par la ou les feuilles et les substrats dans un sac en plastique 64 qui est en outre étuvable pour une raison indiquée par la suite, puis faire le vide dans ce sac et sceller thermiquement celui-ci.

Une pression uniforme égale à la pression atmosphérique est alors appliquée sur chaque substrat.

On chauffe ensuite le sac contenant l'ensemble en question, par exemple dans une étuve, jusqu'à ce que le matériau thermoplastique atteigne sa température de transition état vitreux-état isotrope, après quoi l'on sort le sac de l'étuve et l'on ouvre ce sac.

Le matériau se refroidit alors et se rétracte. Cette rétractation ne peut s'effectuer que dans une seule direction perpendiculaire aux deux substrats. Il apparaît ainsi un axe de symétrie S perpendiculaire à cette direction, dans ce matériau qui, retrouvant son état vitreux, repasse à l'état biréfringent. On obtient ainsi effectivement une couche d'un milieu uniaxe d'anisotropie optique négative, ayant un axe de symétrie qui est perpendiculaire à ladite couche et porte l'axe extraordinaire du milieu.

Le procédé que l'on vient de décrire en référence à la figure 12 s'intègre directement, de façon avantageuse, à un procédé de fabrication d'une cellule à cristal liquide selon la présente invention et plus précisément à l'étape de scellement de cette cellule, ce scellement s'effectuant à chaud et sous pression (avant l'introduction du cristal liquide dans ladite cellule).

La figure 13 illustre cette intégration : on envisage par exemple de réaliser une cellule selon l'invention, destinée à l'affichage en couleur. A cet effet, on peut réaliser une cellule du genre de celle qui est représentée sur la figure 7, munie en outre d'un filtre trichrome 64 placé par exemple entre la plaque 14 et le polariseur 36, parallèlement à ceux-ci, le nombre et la configuration des électrodes qui sont de part et d'autre de la couche de cristal liquide, étant bien entendu adaptés au filtre.

La lame 38 de polymère thermo-plastique qui est représentée sur la figure 7 et dont l'épaisseur optimale a été déterminée, est remplacée, dans le cas de la cellule représentée sur la figure 13, par trois couches 66 de même nature que la lame 38 mais dont la somme des épaisseurs est égale à celle de cette lame 38.

Les polariseurs 34 et 36 jouent alors le rôle des substrats 58 et 60 mentionnés dans la description de la figure 12.

Plus précisément, l'ensemble de la cellule qui est représentée sur la figure 13 est introduit dans un sac en plastique étuvable, le vide est fait dans ce sac et celui-ci est introduit dans une étuve. Après atteinte par le matériau thermoplastique de sa température de transition (connue pour un matériau donné) le sac est sorti de l'étuve et ouvert. Comme précédemment, lors du refroidissement qui s'ensuit, chaque couche 66 devient une couche d'un milieu uniaxe d'anisotropie optique négative, ayant un axe de symétrie perpendiculaire à ladite couche et portant l'axe extraordinaire du milieu.

En outre, du fait du chauffage et de la pression, chaque couche permet de coller l'un à l'autre les composants de la cellule qui lui sont adjacents.

A titre purement indicatif et nullement limitatif, pour un matériau du type SURLYN, la pression uniforme appliquée est de l'ordre de $10^5$ Pa à $2.10^5$ Pa et le chauffage est effectué à une température au moins égale à 100°C, la température de transition de ce matériau étant de l'ordre de 90°C.

On obtient ainsi une cellule assemblée dans laquelle on introduit ensuite les couches de cristal liquide entre les plaques 6, 8 et 14.

D'autres réalisations particulières de la cellule objet de l'invention sont possibles, et notamment une réalisation dans laquelle cette cellule comporte successivement, à partir du côté destiné à être exposé à une lumière incidente, un polariseur circulaire, une lame d'un milieu uniaxe d'anisotropie optique négative et l'ensemble des deux couches et des trois plaques qui a été représenté sur la figure 1 et dans lequel les électrodes 10, 12 et 18 sont transparentes, tandis que l'électrode 16 est optiquement réflectrice.

**Revendications**

1. Cellule à cristal liquide utilisant l'effet de biréfringence contrôlée électriquement, caractérisée en ce qu'elle comprend un ensemble dont l'un des côtés est destiné à être exposé à une lumière incidente et qui comporte :
- une première couche (2) de cristal liquide nématique,
- un premier groupe d'électrodes comprenant au moins une première (12) et une deuxième (10) électrodes transparentes qui sont placées de part et d'autre de la première couche, la première électrode étant dudit côté,
- une deuxième couche (4) dudit cristal liquide, parallèle à la première couche et séparée de celle-ci, cette deuxième couche étant placée du côté de la deuxième électrode du premier groupe, et

- un deuxième groupe d'électrodes comprenant au moins une première (18) et une deuxième (16) électrodes qui sont placées de part et d'autre de la deuxième couche, la première électrode du deuxième groupe étant du côté de la deuxième électrode du premier groupe, au moins la première électrode du deuxième groupe étant transparente,

et en ce que la cellule comprend en outre, au moins dudit côté de l'ensemble, destiné à être exposé à la lumière incidente, un moyen (24, 26 ; 32 ; 34, 36 ; 46, 48) de polarisation de celle-ci, les molécules des couches étant sensiblement orientées suivant une direction d'homéotropie en l'absence de tension électrique entre les première et deuxième électrodes, dans chaque groupe, les axes des molécules de la première couche (2) étant sensiblement parallèles à un premier axe (n1) lorsqu'une tension d'excitation est appliquée entre la première et la deuxième électrodes du premier groupe et les axes des molécules de la deuxième couche (4) étant sensiblement parallèles à un deuxième axe (n2) lorsque ladite tension d'excitation est appliquée entre la deuxième et la première électrodes du deuxième groupe.

2. Cellule selon la revendication 1, caractérisée en ce qu'elle comprend en outre des moyens de compensation de la biréfringence que présente l'ensemble des deux couches (2, 4) de cristal liquide dans sa structure homéotrope et en ce que la cellule est prévue pour que, lors de l'application de la tension d'excitation, les premier (n1) et deuxième (n2) axes fassent le même angle (p) avec la direction d'homéotropie et se projettent, parallèlement à cette dernière et sur un plan qui lui est perpendiculaire, respectivement suivant deux axes de même direction et de sens opposés, parallèles au plan d'observation principal (xOz) de la cellule.

3. Cellule selon la revendication 2, caractérisée en ce que l'épaisseur égale à la somme des épaisseurs des couches (2, 4) de cristal liquide, et chaque moyen de polarisation (24, 26 ; 32) sont prévus pour réaliser, ensemble, ladite compensation.

4. Cellule selon la revendication 3, caractérisée en ce que les électrodes sont transparentes, en ce que la cellule comprend un premier (24) et un second (26) moyens de polarisation situés de part et d'autre dudit ensemble et équivalents à des polariseurs quasi-circulaires complémentaires l'un de l'autre, vis-à-vis d'une onde lumineuse plane incidente, se propageant suivant la direction d'homéotropie, chacun des premier et second moyens de polarisation étant en outre apte à donner à une onde lumineuse plane tombant obliquement sur lui suivant le plan d'observation principal, une polarisation elliptique telle que le grand axe de l'ellipse de polarisation forme un angle avec le plan d'observation principal (xOz) et en ce que la somme des épaisseurs des couches de cristal liquide est égale au double de l'épaisseur particulière ($e_0$) que l'ensemble des deux couches devrait avoir pour annuler cet angle lorsque l'onde tombant obliquement a parcouru toute cette épaisseur particulière.

5. Cellule selon la revendication 3, caractérisée en ce que la deuxième électrode (16) du deuxième groupe est optiquement réflectrice, en ce que le moyen de polarisation (32) est apte à polariser circulairement une onde lumineuse plane incidente, se propageant suivant la direction d'homéotropie, et à donner à une onde lumineuse plane tombant obliquement sur lui, suivant le plan d'observation principal (xOz), une polarisation elliptique telle que le grand axe de l'ellipse de polarisation forme un angle avec le plan d'observation principal et en ce que l'épaisseur ($e_0$) égale à la somme des épaisseurs des couches de cristal liquide est telle qu'elle annule cet angle lorsque l'onde tombant obliquement a parcouru toute cette épaisseur.

6. Cellule selon la revendication 2, caractérisée en ce que les moyens de compensation comprennent au moins une couche (38 ; 42, 44 ; 54, 56) d'un milieu de compensation ayant trois indices optiques principaux dont l'un est plus faible que les deux autres, l'axe correspondant à cet indice étant parallèle à la direction d'homéotropie (D).

7. Cellule selon la revendication 6, caractérisée en ce que les électrodes sont transparentes, en ce que la cellule comprend deux moyens de polarisation (34, 36 ; 46, 48) complémentaires l'un de l'autre, situés de part et d'autre dudit ensemble et en ce que chaque couche (38 ; 42, 44 ; 54, 56) de milieu de compensation est comprise entre l'un des moyens de polarisation et ledit ensemble.

8. Cellule selon la revendication 7, caractérisée en ce que les deux moyens de polarisation sont des polariseurs rectilignes croisés (34, 36) et en ce que le milieu de compensation (38) est un milieu uniaxe d'anisotropie optique négative, ayant un axe de symétrie parallèle à la direction d'homéotropie (D) et un axe extraordinaire parallèle à cet axe de symétrie.

9. Cellule selon la revendication 7, caractérisée en ce que les deux moyens de polarisation sont des polariseurs circulaires (46, 48) complémentaires l'un de l'autre et en ce que le milieu de compensation (54, 56) est un milieu uniaxe d'anisotropie optique négative, ayant un axe de symétrie parallèle à la direction d'homéotropie (D) et un axe extraordinaire parallèle à cet axe de symétrie.

10. Cellule selon l'une quelconque des revendications 8 et 9, caractérisée en ce que le milieu de compensation est fait à partir d'un matériau polymère thermoplastique.

11. Cellule selon la revendication 7, caractérisée en ce que les deux moyens de polarisation sont des polariseurs rectilignes croisés (34, 36) et en ce que le milieu de compensation (42, 44) est un milieu biaxe dont l'axe de plus faible indice est parallèle à la direction d'homéotropie (D).

12. Cellule selon la revendication 11, caractérisée en ce que le produit de l'épaisseur de chaque couche de ce milieu par la valeur absolue de la différence entre les deux autres indices principaux de ce milieu est de l'ordre de 0,125 micromètre.

13. Cellule selon l'une quelconque des revendications 7 à 9, caractérisée en ce qu'elle comprend en outre une couche optiquement réflectrice (40) placée à une extrémité de la cellule, du côté opposé à celui qui est destiné à être exposé à une lumière incidente.

14. Procédé de fabrication d'une couche d'un milieu uniaxe d'anisotropie optique négative, ayant un axe de symétrie (S) perpendiculaire à ladite couche et un axe extraordinaire parallèle à cet axe de symétrie, procédé caractérisé en ce qu'il comprend les étapes successives suivantes :
- on soumet chaque côté d'une couche (62) d'un matériau polymère thermoplastique, maintenue plane, à une pression uniforme,
- on effectue un chauffage de la couche maintenue dans cet état de pression.jusqu'à ce qu'elle passe de sa phase vitreuse à sa phase isotrope,
- on cesse le chauffage, et
- l'on supprime la pression.

0240379

FIG. 1

FIG. 2

0240379

FIG. 3

FIG. 4

0240379

FIG. 5

FIG. 6

FIG. 7

0240379

FIG. 8

FIG. 9

0240379

FIG. 10

FIG. 11

0240379

FIG. 12

FIG. 13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | EP-A-0 162 775 (COMMISSARIAT A L'ENERGIE ATOMIQUE) <br> * Abrégé; revendications 1-2,5,7,8; figure 4; page 17, lignes 30-35 * | 1-4,5 | G 02 F 1/137 <br> G 02 F 1/133 |
| A | GB-A-2 065 321 (SHARP K.K.) <br> * Figure; page 2, lignes 81-89,110-116 * | 1-3 | |
| A | WO-A-8 203 468 (HUGHES AIRCRAFT CO.) <br> * Revendications 1-3,6,8,12; figure 1a * | 1,2 | |

DOMAINES TECHNIQUES RECHERCHES (Int. Cl.4)

G 02 F 1/137
G 02 F 1/133

Le présent rapport de recherche a été établi pour toutes les revendications

| Lieu de la recherche | Date d'achèvement de la recherche | Examinateur |
|---|---|---|
| LA HAYE | 16-06-1987 | FARNESE G.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82